# EUROPÄISCHE PATENTSCHRIFT

(11) **EP 0 991 867 B1**
(45) Veröffentlichungstag und Bekanntmachung des Hinweises auf die Patenterteilung: **10.12.2003**
(21) Anmeldenummer: 98924241.7
(22) Anmeldetag: 29.04.1998
(51) Int. Cl.: F15B 13/044, F16K 27/04

(54) **HYDRAULISCHES VENTIL, INSBESONDERE ZUR STEUERUNG EINER NOCKENWELLENVERSTELLUNG IN EINEM KRAFTFAHRZEUG**
HYDRAULIC VALVE, ESPECIALLY FOR CONTROLLING A CAMSHAFT MOVEMENT IN AN AUTOMOBILE
SOUPAPE HYDRAULIQUE, NOTAMMENT POUR ASSURER LA COMMANDE D'UN DEPLACEMENT D'ARBRE A CAMES DANS UNE AUTOMOBILE

(30) Priorität: 26.06.1997 DE 19727180
(43) Veröffentlichungstag der Anmeldung: 12.04.2000
(73) Patentinhaber: Hydraulik-Ring GmbH, 09212 Limbach-Oberfrohna (DE)
(72) Erfinder: NEUHAUS, Rolf, D-97816 Lohr (DE); RETTINGER, Jürgen, D-97737 Gemünden (DE); SCHLÖDER, Robert, D-97737 Gemünden (DE)
(74) Vertreter: Jackisch-Kohl, Anna-Katharina
(86) Internationale Anmeldenummer: EP9802525
(87) Internationale Veröffentlichungsnummer: WO99000602

(56) Entgegenhaltungen:
- DE-A- 3 914 094
- DE-A- 4 228 045
- DE-A- 4 422 742
- DE-A- 4 423 629
- GB-A- 2 277 367

## Beschreibung

Die Erfindung betrifft ein hydraulisches Ventil, insbesondere zur Steuerung einer Nockenwellenverstellung in einem Kraftfahrzeug, nach dem Oberbegriff des Anspruches 1.

Bei diesem hydraulischen Ventil (DE-A-44 23 629) wird eine Ventilbuchse mit ihrer Stirnseite voraus in eine Aufnahmebohrung einer Ventilplatte eingesetzt. Die Ventilbuchse hat eine axiale Steuerbohrung, die einen Steuerkolben aufnimmt. Von der Stirnseite der Ventilbuchse aus ist eine Scheibe in die Steuerbohrung eingepreßt. An der Außenseite ist die Ventilbuchse im Bereich dieser Stirnseite mit einer abseits einer Druckmittelströmung befindlichen Eindrehung versehen, die als Ringnut ausgebildet ist und einen Dichtring aufnimmt.

Aus der DE 41 31 384 C2 ist ein hydraulisches Ventil bekannt, das eine Ventilbuchse aufweist, die mit einer Stirnseite voraus in eine Aufnahmebohrung eines Gehäuses einsetzbar ist. Das Gehäuse kann z.B. das Gehäuse eines Verbrennungsmotors sein. In einer axialen Steuerbohrung der Ventilbuchse befindet sich ein Steuerkolben, mit dem die Druckmittelwege zwischen einem Zulaufkanal, einem Ablaufkanal und einem Verbraucherkanal steuerbar sind. Dabei kann einer dieser Kanäle axial von der Aufnahmebohrung des Gehäuses abgehen und mit der Mündung der Steuerbohrung an der Stirnseite der Ventilbuchse im selben Strömungspfad liegen. Bei dem Ventil nach der DE 41 31 384 C2 ist die Ventilbuchse mit einem Elektromagneten zusammengebaut, von dem ein Steuerkolben in der Steuerbohrung der Ventilbuchse gegen die Kraft einer Schraubendruckfeder näher zur Stirnseite der Ventilbuchse hin verschiebbar ist. Die Schraubendruckfeder stützt sich an einer Innenschulter der Ventilbuchse und an einem Sicherungsring ab, der in der Nähe des dem Elektromagneten zugewandten Endes des Steuerkolbens an diesem angebracht ist.

Ein hydraulisches Ventil mit einem ähnlichen Aufbau ist aus der DE 44 22 742 A1 bekannt. Dort ist ein Steuerkolben in der Steuerbohrung eines Ventilbauteils verschiebbar, das nicht als in ein Gehäuse einzusetzende Ventilbuchse ausgebildet ist, sondern unmittelbar ein Gehäuse mit Außenanschlüssen darstellt. Die Schraubendruckfeder, gegen deren Kraft der Steuerkolben von einem Elektromagneten bewegbar ist, stützt sich zwischen dem Steuerkolben und einer Scheibe ab, die von einer dem Elektromagneten abgewandten Stirnseite des Gehäuses in die Steuerbohrung eingepreßt ist. Hier ist eine Justage der Federkraft möglich, indem die Scheibe um einen mehr oder weniger großen Weg in die Steuerbohrung gedrückt wird.

Das Ventilgehäuse, der Steuerkolben und die Abstützscheibe für die Schraubendruckfeder sind bei dem Ventil nach der DE 44 22 742 A1, das in Serie für die Automobilindustrie produziert wird, aus Aluminium bzw. einer Aluminiumlegierung gefertigt.

Ein weiteres hydraulisches Ventil ist aus der EP 0 667 459 A1 bekannt. Bei dem in dieser Druckschrift gezeigten hydraulischen Ventil ist die Scheibe in die Ventilbuchse geschraubt, wobei ohne weiteres eine Justage der Kraft der zwischen der Scheibe und dem Steuerkolben eingespannten Schraubendruckfeder möglich ist. Allerdings ist die Herstellung der Gewinde an der Scheibe und an der Ventilbuchse sowie das Einschrauben der Scheibe recht aufwendig und teuer.

Der Erfindung liegt die Aufgabe zugrunde, das gattungsgemäße hydraulische Ventil im Hinblick auf die Herstellung von Einzelteilen und im Hinblick auf die Montage kostengünstiger zu gestalten.

Diese Aufgabe wird beim gattungsgemäßen hydraulischen Ventil erfindungsgemäß mit den kennzeichnenden Merkmalen des Anspruches 1 gelöst.

Die Scheibe des erfindungsgemäßen hydraulischen Ventiles ist mit Preßsitz in die Steuerbohrung gedrückt, so daß sie selbst und die Ventilbuchse nicht mit einem Gewinde versehen müssen und deshalb retativ einfach herzustellen sind. Die von der Stirnseite her außen abseits einer Druckmittelströmung vorgesehene Eindrehung der Ventilbuchse erlaubt es, trotz einer wegen der notwendigen Abdichtung zwischen unterschiedlichen Druckmittelkanälen engen Passung zwischen der Ventilbuchse und der Aufnahmebohrung des Gehäuses die Ventilbuchse saugend in die Aufnahmebohrung einzuschieben. Eine geringfügige Aufweitung der Buchse im Bereich der eingepreßten Scheibe führt nämlich aufgrund der Eindrehung nicht zu einem Übermaß an der Ventilbuchse. Hierzu trägt bei, daß der Abstand des Endes der Eindrehung von der Stirnseite der Ventilbuchse größer ist als der Abstand des weiter von der Stirnseite entfernten Endes der Preßstrecke zwischen Ventilbuchse und Scheibe von der Stirnseite. Das Verhältnis dieser Abstände liegt zwischen 1,5 und 2,0, vorzugsweise zwischen 1,7 und 1,8. Eine solche Länge der Eindrehung verhindert wirksam ein durch das Einpressen der Scheibe bedingtes Übermaß an der Ventilbuchse. Andererseits ergibt sich dadurch auch eine ausreichend lange Dichtlänge.

Es ist zwar aus der DE 39 14 094 A1 schon ein hydraulisches Ventil bekannt, bei dem eine Scheibe mit Preßsitz in eine Ventilbuchse eingesetzt ist und die Ventilbuchse im Bereich der Scheibe außen eine Eindrehung aufweist. Allerdings besteht die Scheibe aus einem Kunststoff, so daß nicht zu erwarten ist, daß sich die offenbar aus einem metallischen Werkstoff gefertigte Ventilbuchse beim Einpressen der Scheibe aufweitet. Zudem liegt die Eindrehung in einem Druckmittelweg, der axiale Durchbrüche in der Scheibe, dem Bereich der Aufnahmebohrung vor der Ventilbuchse, die Eindrehung und einen im Bereich der Eindrehung radial von der Aufnahmebohrung abgehenden Kanal umfaßt. Das Einpressen der Scheibe hat also nichts mit der Eindrehung außen an der Ventilbuchse zu tun.

Demgegenüber ist beim erfindungsgemäßen hydraulischen Ventil die Eindrehung an der Ventilbuchse vorhanden, die nichts mit der Druckmittelströmung zu tun hat.

Vorteilhafte Ausgestaltungen eines erfindungsgemäßen hydraulischen Ventiles kann man den Unteransprüchen entnehmen.

So sind gemäß Anspruch 2 die Ventilbuchse und die Scheibe aus hinsichtlich ihres Ausdehnungskoeffizienten zumindest weitgehend gleichen Materialien gefertigt. Dadurch ist gewährleistet, daß der Preßsitz zwischen der Scheibe und der Ventilbuchse in einem großen Temperaturbereich erhalten bleibt. Vorzugsweise sind die Ventilbuchse und die Scheibe jeweils aus Aluminium oder einer Aluminiumlegierung gefertigt.

In radialer Richtung beträgt die Tiefe der Eindrehung vorzugsweise weniger als 10% der Wanddicke der Ventilbuchse. Im Vergleich zur Tiefe einer nach außen offenen und in einem Druckmittelströmungspfad liegenden Ringnut an der Ventilbuchse ist die Eindrehung dann wesentlich weniger tief.

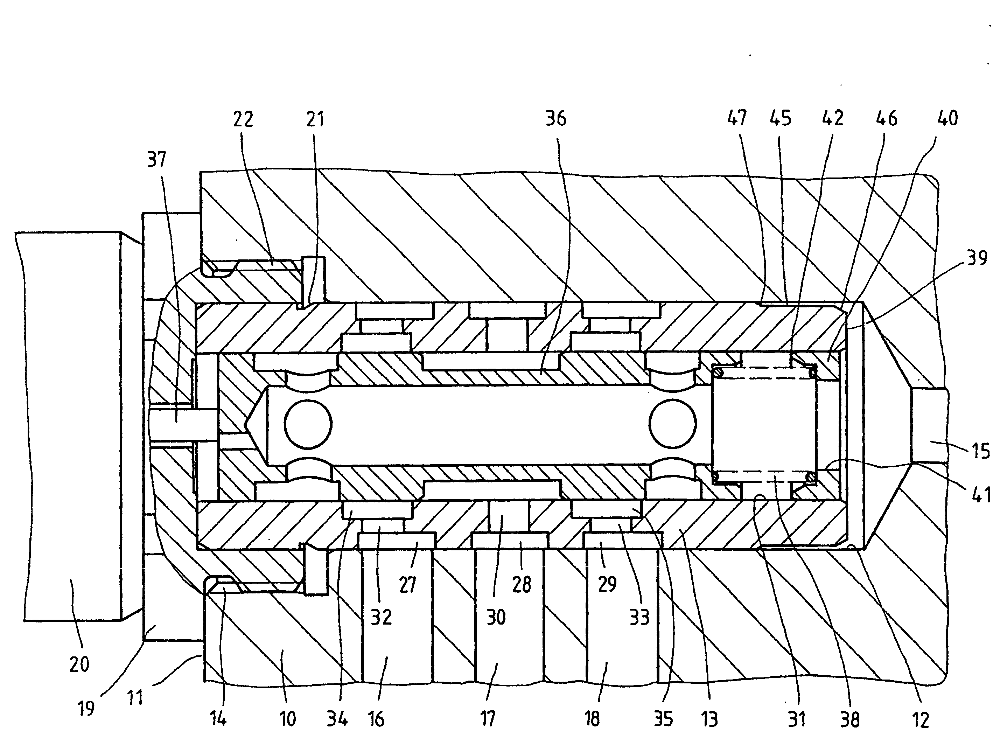

Ein Ausführungsbeispiel eines erfindungsgemäßen hydraulischen Ventils ist in der Zeichnung dargestellt. Anhand dieser Zeichnung wird die Erfindung nun näher erläutert.

In der Zeichnung ist bereichsweise ein metallisches Gehäuse 10 erkennbar, das z.B. Teil des Motorblocks eines Kraftfahrzeugs ist. In das Gehäuse 10 ist von einer Montagefläche 11 aus eine Aufnahmebohrung 12 für eine Ventilbuchse 13 eingebracht. Letztere kann man als rohrförmiges Bauteil betrachten, das über seine gesamte Länge konstanten Außen- und Innendurchmesser besitzt und dessen Außenfläche und Innenfläche durch verschiedene Eindrehungen unterbrochen sind. Über den größten Teil der Länge der Aufnahmebohrung 12 ist deren Durchmesser so auf den Außendurchmesser der Ventilbuchse 13 abgestimmt, daß die Ventilbuchse saugend in die Aufnahmebohrung einschiebbar ist. Gegen die Montagefläche 11 hin besitzt die Aufnahmebohrung 12 einen Abschnitt mit vergrößertem Durchmesser, der mit einem Innengewinde 14 versehen ist. Vom Boden der Aufnahmebohrung 12 geht axial ein Druckmittelkanal 15 ab. Drei weitere Druckmittelkanäle 16, 17 und 18 münden radial in die Aufnahmebohrung 12.

Die Ventilbuchse 13 ist in eine Sackbohrung eines Polkerns 19 eines Elektromagneten 20 eingesetzt und darin durch Eindrücken von Material des Polkerns in eine Eindrehung 21 gehalten. Der Polkern 19 ist an einem axialen Fortsatz mit einem Außengewinde 22 versehen und damit in das Innengewinde 14 der Aufnahmebohrung 12 eingeschraubt.

Den Druckmittelkanälen 16, 17 und 18 des Gehäuses 10 sind nach außen offene Ringnuten 27, 28 und 29 der Ventilbuchse 13 zugeordnet. Von der mittleren Ringnut 28 führen mehrere Radialbohrungen 30 in die durchgehende und als Steuerbohrung 31 dienende Innenbohrung der Ventilbuchse 13. Die Ringnuten 27 und 29 sind über Radialbohrungen 32 bzw. 33 mit axial versetzt zu ihnen angeordneten und nach innen zur Steuerbohrung 31 hin offenen Ringnuten 34 und 35 verbunden.

In der Steuerbohrung 31 ist ein Steuerkolben 36 axial verschiebbar, mit dem die Druckmittelwege zwischen den Kanälen 15, 16, 17 und 18 steuerbar sind. Der Steuerkolben 36 ist an einer dem Elektromagneten 20 zugewandten Stirnseite von einem Stößel 37 des Elektromagneten beaufschlagbar und kann von dem Elektromagneten gegen die Kraft einer Schraubendruckfeder 38 in Richtung auf den Boden der Aufnahmebohrung 12 zu und näher an die diesem Boden zugewandte Stirnseite 39 der Ventilbuchse 13 hin verschoben werden. Die Schraubendruckfeder ist zwischen dem Steuerkolben 36 und einer Scheibe 40 eingespannt, die von der Stirnseite 39 her mit Preßsitz in die Steuerbohrung 31 der Ventilbuchse 13 eingedrückt ist. Um eine ungehinderte Druckmittelströmung zwischen der Steuerbohrung 31 und dem Druckmittelkanal 15 zu ermöglichen, ist die Scheibe 40 mit einem zentralen Durchgang 41 versehen. Die Preßstrecke zwischen der Scheibe 40 und der Ventilbuchse 13 ist geringfügig kleiner als die axiale Ausdehnung der Scheibe 40, da letztere eine Einführschräge 42 aufweist.

Die Ventilbuchse 13 und die Scheibe 40 bestehen aus derselben Aluminiumlegierung, haben deshalb denselben thermischen Ausdehnungskoeffizienten und bleiben deshalb in einem großen Temperaturbereich fest miteinander verbunden.

Beim Einpressen der Scheibe 40 in die Steuerbohrung 31 weitet sich die Ventilbuchse 13 geringfügig auf. Damit diese Aufweitung beim Einführen der Ventilbuchse 13 in die Aufnahmebohrung 12 nicht zu Schwierigkeiten führt, besitzt die Ventilbuchse 13 von ihrer Stirnseite 39 her außen eine Eindrehung 45, deren Tiefe in radialer Richtung wesentlich geringer als die Tiefe der Ringnuten 27, 28 oder 29 ist. Bei einem Ventil, bei dem der Außendurchmesser der Ventilbuchse 20 mm und der Innendurchmesser 12 mm beträgt, ist die Eindrehung z.B. 0,5 mm tief und beträgt also nur etwa 6 % der durch den Außen- und Innendurchmesser gegebenen Wanddicke der Ventilbuchse 13. In axialer Richtung von der Stirnseite 39 der Ventilbuchse 13 weg erstreckt sich die Eindrehung 45 über die Preßstrecke zwischen der Scheibe 40 und der Ventilbuchse 13 hinaus. Im vorliegenden Beispiel ist das Ende der Eindrehung 45 etwa 1,75 mal so weit von der Stirnseite 39 der Ventilbuchse 13 entfernt wie das am Übergang zur Einführschräge 42 der Scheibe 40 befindliche Ende der Preßstrecke zwischen der Scheibe 40 und der Ventilbuchse 13. Eine solche Länge der Eindrehung 45 verhindert wirksam ein durch das Einpressen der Scheibe 40 bedingtes Übermaß an der Ventilbuchse 13. Andererseits ist die Dichtlänge zwischen der Ringnut 29 und der Eindrehung 45 an der Außenseite der Ventilbuchse 13 noch lange genug, um die Leckage von Druckmittel zwischen den Kanälen 15 und 18 gering zu halten.

An beiden Enden der Eindrehung 45 befinden sich in die gleiche Richtung geneigte Einführschrägen 46 bzw. 47, die das Einschieben der Ventilbuchse 13 in die Aufnahmebohrung 12 erleichtert.

## Patentansprüche

1. Hydraulisches Ventil, insbesondere zur Steuerung einer Nokkenwellenverstellung in einem Kraftfahrzeug, mit einer Ventilbuchse (13), die mit einer Stirnseite (39) voraus in eine Aufnahmebohrung (12) eines Gehäuses (10) einsetzbar ist, von der Stirnseite (39) her außen mit einer abseits einer Druckmittelströmung befindlichen Eindrehung (45) versehen ist und eine axiale Steuerbohrung (31) aufweist, in die von der Stirnseite (39) her eine Scheibe (40) eingesetzt ist, die mit Preßsitz in die Steuerbohrung (31) gedrückt ist,
**dadurch gekennzeichnet, daß** der Abstand des Endes der Eindrehung (45) von der Stirnseite (39) der Ventilbuchse (13) größer ist als der Abstand des weiter von der Stirnseite (39) entfernten Endes der Preßstrecke zwischen Ventilbuchse (13) und Scheibe (40) von der Stirnseite (39), und daß das Verhältnis der Abstände zwischen 1,5 und 2,0, vorzugsweise zwischen 1,7 und 1,8 liegt.

2. Hydraulisches Ventil nach Anspruch 1,
**dadurch gekennzeichnet, daß** die Ventilbuchse (13) und die Scheibe (40) auf hinsichtlich ihres Ausdehnungskoeffizienten zumindest weitgehend gleichen Materialien gefertigt sind.

3. Hydraulisches Ventil nach Anspruch 1 oder 2,
**dadurch gekennzeichnet, daß** die Ventilbuchse (13) und die Scheibe (40) jeweils aus einem metallischen Werkstoff gefertigt sind.

4. Hydraulisches Ventil nach Anspruch 3,
**dadurch gekennzeichnet, daß** die Ventilbuchse (13) und die Scheibe (40) jeweils aus Aluminium oder einer Aluminiumlegierung gefertigt sind.

5. Hydraulisches Ventil nach einem der vorhergehenden Ansprüche,
**dadurch gekennzeichnet, daß** die Tiefe der Eindrehung (45) in radialer Richtung weniger als 10% der Wanddicke der Ventitbuchse (13) beträgt.

6. Hydraulisches Ventil nach einem der vorhergehenden Ansprüche,
**dadurch gekennzeichnet, daß** die Ventilbuchse (13) mit wenigstens einer nach außen offenen und in einem Druckmittelströmungspfad liegenden Ringnut (27, 28, 29) versehen ist, und daß die Tiefe der Eindrehung (45) in radialer Richtung wesentlich geringer ist als die Tiefe der Ringnut (27, 28, 29).

## Claims

1. Hydraulic valve, especially for controlling a camshaft movement in an automobile, with a valve bushing (13) that is insertable from an end face (39) thereof into a receiving bore (12) of a housing (10) and that, seen from the end face (39), is provided on the outside with a turned groove (45), to be found apart of the flow of a pressurized medium, and comprises an axial control bore (31 ), into which a disk (40) is inserted from the end face (39) which is pressed press fit into the control bore (31 ),
**characterized in that** the distance of the end of the turned groove (45) from the end face (39) of the valve bushing (13) is greater than the distance of the end of the pressing stretch, which is further away from the end face (39) between valve bushing (13) and disk (40) from the end face (39), and that the relation of the distances is between 1.5 and 2.0, preferably between 1.7 and 1.8.

2. Hydraulic valve according to claim 1,
**characterized in that** the valve jack (13) and the disk (40) are made of at least mainly the same materials, with regard to their coefficient of expansion.

3. Hydraulic valve according to claim 1 or 2,
**characterized in that** the valve bushing (13) and the disk (40) are respectively made of a metallic material.

4. Hydraulic valve according to claim 3,
**characterized in that** the valve bushing (13) and the disk (40) are respectively made of aluminium or aluminium alloy.

5. Hydraulic valve according to one of the preceding claims,
**characterized in that** the depth of the turned groove (45) in the radial direction is less than 10% of the wall thickness of the valve bushing (13).

6. Hydraulic valve according to one of the preceding claims,
**characterized in that** the valve bushing (13) is supplied with at least one ring groove (27, 28, 29), being open outwardly and situated within a flow path of pressurized medium and that the depth of the turned groove (45) in the radial direction is considerably less than the depth of the ring groove (27, 28, 29).

## Revendications

1. Soupape hydraulique, notamment pour assurer la commande d'un déplacement d'arbre à came dans une automobile avec une douille de soupape (13), qui est insérable avec un côté frontal (39) en avant dans un perçage de positionnement (12) d'une bôite (10) et est muni du côté frontal (39) à l'extérieur d'une gorge tournée dans la masse (45) laquelle se trouve à l'écart d'un flux de fluide sous pression, la douille de soupape (13) comprenant un perçage de commande (31) axial dans lequel du côté frontal (39) est inséré un disque (40), lequel est pressé avec ajustement forcé dans le perçage de commande (31),
**caractérisée en ce que** la distance du bout de la gorge tournée dans la masse (45) du côté frontal (39) de la douille de soupape (13) est plus grande que la distance du bout du chemin forcé, qui est plus éloigné du côté frontal (39), entre douille de soupape (13) et disque (40) du côté frontal (39), et que la relation des distances se trouve entre 1,5 et 2,0, de préférence entre 1,7 et 1,8.

2. Soupape hydraulique selon revendication 1,
**caractérisée en ce que** la douille de soupape (13) et le disque (40) sont fabriqués en matériaux au moins en grande partie équivalents en ce qui concerne leur coefficient de dilatation.

3. Soupape hydraulique selon revendication 1 ou 2,
**caractérisée en ce que** la douille de soupape (13) et le disque (40) sont fabriqués respectivement en un matériau métallique.

4. Soupape hydraulique selon revendication 3,
**caractérisée en ce que** la douille de soupape (13) et le disque (40) sont fabriqués respectivement en aluminium ou en alliage d'aluminium.

5. Soupape hydraulique selon une des revendications précédentes,
**caractérisée en ce que** la profondeur de la gorge tournée dans la masse (45) dans la direction radiale fait moins de 10% de l'épaisseur de paroi de la douille de soupape (13).

6. Soupape hydraulique selon une des revendications précédentes,
**caractérisée en ce que** la douille de soupape (13) est munie d'au moins une rainure annulaire (27, 28, 29), ouverte vers l'extérieur et située dans un chemin de flux de fluide sous pression et que la profondeur de la gorge tournée dans la masse (45) en direction radiale est bien moindre que la profondeur de la rainure annulaire (27, 28, 29).
